(19) Europäisches Patentamt
European Patent Office
Office européen des brevets

(11) **EP 2 180 360 A2**

(12) **EUROPEAN PATENT APPLICATION**

(43) Date of publication:
**28.04.2010 Bulletin 2010/17**

(51) Int Cl.:
***G02B 6/00*** *(2006.01)*

(21) Application number: **09252453.7**

(22) Date of filing: **20.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **27.10.2008 JP 2008276161**

(71) Applicant: **Kuroda Electric Co., Ltd.**
**Minato-ku**
**Tokyo (JP)**

(72) Inventors:
- **Gonda, Makoto**
  **Tokyo (JP)**
- **Uchiyama, Mitsuru**
  **Tokyo (JP)**
- **Sasaki, Satoshi**
  **Tokyo (JP)**
- **Ishizeki, Hirofumi**
  **Tokyo (JP)**

(74) Representative: **Lamb, Martin John Carstairs**
**Marks & Clerk LLP**
**90 Long Acre**
**London**
**WC2E 9RA (GB)**

# (54) Light guide panel, method for manufacuring the same and light source unit

(57) The invention provides a light guide panel (11) that improves luminance and reduces uneven luminance and color aberration. The light guide panel (11) of the invention may be formed by irradiating laser light from a laser light source to the surface of an acrylic resin plate made of polymethylmethacrylate whose weight-average molecular weight is 10,000 to 100,000 or of a copolymer of 90 to 99.9 % by weight of methyl methacrylate and 0.1 to 10 % by weight of acrylic ester and whose weight-average molecular weight is 1,000 to 100,000 to form a light scattering pattern including a large number of concave portions (12) each of which also includes a large number of micro-concavities and convexities (12a) therein.

FIG.1

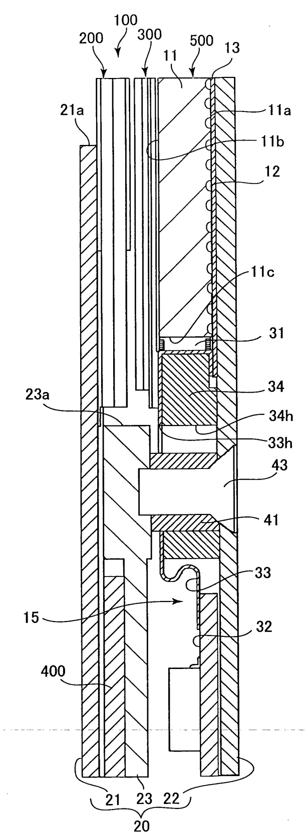


EP 2 180 360 A2

## Description

CROSS REFERENCES TO RELATED APPLICATIONS

This application claims a priority to a Japanese patent application No. 2008-276161 filed on October 27, 2008, the entire content of which is hereby incorporated herein by reference.

DESCRIPTION

1. Field of the Invention

The present invention relates to a light guide panel, a method for manufacturing the light guide panel by forming a light scattering pattern by means of laser light and a light source unit having the light guide panel.

2. Related Art

A liquid crystal display unit such as a liquid crystal display is provided with a backlight unit as a light source unit disposed behind a liquid crystal panel in general. This type of backlight unit includes a direct-beneath type unit in which a light source is disposed right beneath the light guide panel and an edge-light type unit in which a light source is disposed on an edge surface of the light guide panel. The right-beneath type backlight unit is thick because the light source is disposed right beneath the light guide panel. Accordingly, the edge-light type unit is desirable in order to realize a thin-type liquid crystal display device.

As the edge-light type backlight unit, there is known one provided with a light guide panel in which mirrored conical dots are formed as a plurality of concave portions on one side of surfaces of a translucent plate and an output surface that outputs light reflected by the conical dots is formed on the other side of the plate as disclosed in Japanese Patent Application Laid-open No. Hei.8-327807 for example. Then, as a method for laser-machining the light-scattering conical dots, there is known one having steps of mounting a resin plate on a X-Y precision moving table and of moving the resin plate by the X-Y precision moving table every time when one dot is formed by laser light as disclosed in Japanese Patent Application Laid-open No. 2000-66029 for example.

However, the prior art light guide panels described have had problems that luminance of the light outputted out of the output surface of the light guide panel may drop and unevenness of luminance and color aberration of the light outputted out of the output surface may often become conspicuous.

More specifically, the luminance may drop and the uneven luminance may occur when light scattering rate of the light in the concave portion formed on the light guide panel is low. Meanwhile, although no color aberration hardly occurs when light of the light source is inputted from the edge surface of the light guide panel and the light is totally reflected by the concave portion, color aberration (chromatic aberration) may occur when the light is refracted, not totallyreflected, by the concave portion and is outputted to the outside and then refracted again and enters the concave portion because refracting angles differ depending on wavelengths of the light. For example, there are many cases when light output from the vicinity of light entering portion of the output surface of the light guide panel becomes blue due to the color aberration and light output from the output surface becomes yellow by being refracted by the large number of concave portions when the light is distant from the light entering portion.

The drop of luminance, uneven luminance and color aberration become conspicuous when the light guide panel is large, e.g.., 40-inch or more, because the optical path from the light source becomes long.

SUMMARY OF THE INVENTION

Accordingly, the present invention has been made in view of the abovementioned problems and aims at providing a method for manufacturing a light guide panel that improves luminance and reduces the uneven luminance and color aberration, the light guide panel manufactured by the method and a light source unit having the light guide panel.

According to the invention, there is provided a light guide panel (11) made of an acrylic resin plate and comprising a scattering surf ace (11a) and an output surf ace (11b) for outputting light scattered by the scattering surface (11a) to an outside of the panel,
**characterized in that** the acrylic resin plate is made of polymethylmethacrylate whose weight-average molecular weight is 10,000 to 100,000 or a copolymer which is composed of 90 to 99.9 % by weight of methyl methacrylate and 0.1 to 10 % by weight of acrylic ester and whose weight-average molecular weight is 1,000 to 100,000, and
that the scattering surface (11a) has a large number of concave portions (12) each of which also has a large number of micro-concavities and convexities (12a) therein formed by laser light (L) irradiated on the acrylic resin plate.

Preferably, the acrylic resin plate is made of polymethylmethacrylate whose weight-average molecular weight is 10,000 to 100,000.

Preferably, the acrylic resin plate is made of the copolymer which is composed of 90 to 99.9 % by weight of methyl methacrylate and 0.1 to 10 % by weight of acrylic ester and whose weight-average molecular weight is 1,000 to 100,000.

Preferably, each of the micro-concavities and convexities (12a) is formed to have a diameter within a range from 1 μm to 20 μm.

Preferably, each of the concave portions is a dot or a groove.

According to the invention, there is also provided a light source unit (500) having the light guide panel (11) described above and a light source section (15) disposed on edge surfaces of the light guide panel (11).

According the invention, there is also provided a method for manufacturing a light guide panel (11), having steps of:

marking off a surface of an acrylic resin plate into a plurality of scanning blocks (11B) in advance, the acrylic resin plate being made of polymethylmethacrylate whose weight-average molecular weight is 10,000 to 100,000 or a copolymer which is composed of 90 to 99.9 % by weight of methyl methacrylate and 0.1 to 10 % by weight of acrylic ester, and whose weight-average molecular weight is 1,000 to 100,000; and

scanning laser light per each scanning block (11B) to form a large number of concave portions (12) each of which also has a large number of micro-concavities and convexities (12a) on the surface of the acrylic resin plate.

Preferably, the acrylic resin plate is made of polymethylmethacrylate whose weight-average molecular weight is 10,000 to 100,000.

Preferably, the acrylic resin plate is made of the copolymer which is composed of 90 to 99.9 % by weight of methyl methacrylate and 0.1 to 10 % by weight of acrylic ester and whose weight-average molecular weight is 1,000 to 100,000.

Preferably, each of the micro-concavities and convexities (12a) is formed to have a diameter within a range from 1 μm to 20 μm.

Preferably, each of the concave portions is a dot or a groove.

According to the light guide panel of the invention described above, the acrylic resin plate is made of polymethylmethacrylate whose weight-average molecular weight is 10,000 to 100,000 or the copolymer of 90 to 99.9 % by weight of methyl methacrylate and 0.1 to 10 % by weight of acrylic ester and whose weight-average molecular weight is 1,000 to 100,000, so that the large number of micro-concavities and convexities is formed in the concave portions which are formed by laser light irradiated. The large number of micro-concavities and convexities effectively scatters light, so that luminance of the light guide panel is improved and the uneven luminance and color aberration are reduced.

According to the light source unit of the invention described above, it is possible to improve the product quality as the light source unit because the luminance of light of the light guide panel is improved and the uneven luminance and color aberration are reduced.

According to the light guide panel manufacturing method of the invention described above, it is possible to laser-machine even a large-size acrylic resin plate by a simply structured laser machining apparatus by scanning the laser light per each scanning block. Accordingly, it is possible to shorten a time required for producing the light guide panel and to improve the productivity of the light guide panel whose luminance is improved and whose uneven luminance and color aberration are reduced.

The above and other advantages of the invention will become more apparent in the following description and the accompanying drawings in which like numerals refer to like parts.

BRIEF DESCRIPTION OF THE DRAWINGS

FIG. 1 is a partial section view showing a part of a liquid crystal display unit having a backlight unit as a light source unit according to an embodiment of the invention;

FIG. 2 is an explanatory diagram showing an outline of a laser machining apparatus;

FIG. 3 is an explanatory diagram showing a light scattering pattern formed by the laser machining apparatus;

FIG. 4 is an explanatory diagram showing a plate surface that turns out to be a scattering plane of an acrylic resin plate that becomes a light guide panel;

FIG. 5 is a diagrammatic view showing a concave portion formed on the scattering surface of the light guide panel;

FIG. 6 is a graph showing molecular weight distribution curves of samples A through H;

FIG. 7 is a graph showing average luminance of the respective samples A through E;

FIG. 8 is a microscope photograph showing a concave portion formed on the comparative sample A;

FIG. 9 is a microscope photograph showing a concave portion formed on the comparative sample C;
FIG. 10 is a microscope photograph showing a concave portion formed on the comparative sample D;
FIG. 11 is a graph showing micro-concavities and convexities on the surface of the concave portion in the longitudinal direction of the comparative sample A shown in FIG. 8;
FIG. 12 is a graph showing micro-concavities and convexities on the surface of the concave portion in the longitudinal direction of the sample C shown in FIG.9;
FIG. 13 is a graph showing micro-concavities and convexities on the surface of the concave portion in the longitudinal direction of the sample D shown in FIG.10; and
FIG. 14 is a graph showing a distribution of diameters of the micro-concavities and convexities of the respective samples A, C and D.

DETAILED DESCRIPTON OF THE INVENTION

Preferred embodiments of the invention will be explained in detail below with reference to the drawings.

(First Embodiment)

FIG. 1 is a partial section view showing a part of a liquid crystal display unit having a backlight unit as a light source unit according to a first embodiment of the invention.

The liquid crystal display 100 shown in FIG. 1 is a liquid crystal display of a liquid crystal television set and others and has a liquid crystal panel 200, an optical sheet group 300 (FIG. 2) disposed behind a frame 20, a driving section 400 for driving the liquid crystal panel 200 and a backlight unit 500 disposed behind the optical sheet group 300. It is noted that the liquid crystal display 100 is a large-size display such as 40-inch or more in the present embodiment.

The backlight unit 500 is an edge light-type unit and has a light guide panel 11 made of an acrylic resin plate. The light guide panel 11 has a pair of plate surfaces. Among them, one plate surface is a scattering surface 11a and the other plate surface is an output surface 11b for outputting light scattered by the scattering surface 11a to the outside.

The backlight unit 500 also has a reflection sheet 13 disposed so as to face to the scattering surface 11a of the light guide panel 11, a LED unit 15 as a light source section disposed in the vicinity of an edge surface 11c of the light guide panel 11 and the frame 20 that is a case of the liquid crystal display 100 and holds the liquid crystal panel 200, the light guide panel 11 and others. It becomes possible to thin the backlight unit 500, i.e., the liquid crystal display 100, by arranging the backlight unit 500 as the edge light unit as described above.

The frame 20 is formed of a metal such as aluminum and has a front panel 21 forming an aperture 21a where a display portion of the liquid crystal panel 200 is exposed, a rear panel 22 disposed behind the front panel 21 and formed so as to cover the light guide panel 11 and the LED unit 15 and an inner panel 23 disposed between the front panel 21 and the rear panel 22 and having an opening portion 23a that is larger than the liquid crystal panel 200. The rear panel 22 is fixed to the inner panel 23.

A light scattering pattern composed of a large number of concave portions 12 is formed on the scattering surface 11a of the light guide panel 11 so that light entered from the edge surface 11c of the light guide panel 11 is scattered by each concave portion 12 and is outputted out of the output surface 11b of the light guide panel 11. Thereby, the backlight unit 500 surface-emits light toward the liquid crystal panel 200.

The LED unit 15 has a plurality (large number) of LEDs 31, a driving circuit board 32 for driving the LEDs 31 and a flexible printed board 33 on which wiring patterns not shown connecting the LED 31 and the driving circuit board 32 are printed.

The LEDs 31 are white LEDs and are composed of blue LED elements not shown and a fluorescent body not shown. It is noted that the white LED is not limited to them and may be three primary color white LED having red, green and blue LED elements, i.e., various white LED may be applied. It is possible to lower voltage and power consumption by using the LEDs 31 as compared to a case of using a cold cathode fluorescent tube (CCFL).

The LED unit 15 has a heat exchanger plate 34 made of a thermally conductive material such as aluminum. The heat exchanger plate 34 transfers heat of the LEDs 31 to the frame 20 and is set to have a thickness less than that of the light guide panel 11.

The flexible printed board 33 is constructed by forming wiring conductors on a flexible film-like insulator and is deformed so as to bend substantially into a shape of Z in section. Thereby, when the LED unit 15 is disposed in the frame 20, the LEDs 31 provided at the edge of the flexible printed board 33 are pressed against the edge surface 11c of the light guide panel 11 by elastic force of the flexible printed board 33 that tries to return to its original shape. Thereby, light of the LEDs 31 is inputted efficiently from the edge surface 11c.

Here, the flexible printed board 33 and the heat exchanger plate 34 are provided with a plurality of long holes 33h and 34h formed along a direction of depth of the figure and lengthy in the direction in which the LEDs 31 are pressed against the edge surface 11c of the light guide panel 11 by the elastic force of the bent portion of the flexible printed board 33. Then, hollow cylindrical rivets are fixed to the rear panel 22 of the frame 20 facing to the long holes 33h and 34h so that they project toward the inside of the unit. Each rivet is inserted through the facing long holes 33h and 34h. The inner and rear panels 23 and 22 are fastened in a body with a screw 43 such as a countersunk screw as a fastening tool through the rivet.

It is possible to thin the backlight unit 500 by thus using the LEDs 31 as the light source, as compared to the case of using the CCFL as a light source.

By the way, the light guide panel 11 of the present embodiment is formed of an acrylic resin plate and the concave portions 12 of the plate surface forming the scattering surface 11a are formed by means of a laser machining apparatus.

FIG. 2 is an explanatory diagram showing an outline of the laser machining apparatus 600.

The laser machining apparatus 600 has a laser oscillator 601 as a laser light source, a reflection mirror 602 for reflecting a laser light L, an X-axis mirror 603 for scanning the laser light L in the X-axis direction of an X-Y table 606 described later, a Y-axis mirror 604 for scanning the laser light L in the Y-axis direction of the table 606, a condenser lens 605, the X-Y table 606 on which the acrylic resin plate that becomes the light guide panel 11 is mounted and is capable of moving the acrylic resin plate in the X- and Y-axis directions and a control section 607 for controlling the whole laser machining apparatus 600.

The laser oscillator 601 outputs the pulsed (intermittent) laser light L to machine the plate surface that becomes the scattering surface 11a of the acrylic resin plate, i.e., the light guide panel 11.

The reflection mirror 602 reflects the laser light L outputted out of the laser oscillator 601. The X-axis mirror 603 scans the laser light L reflected by the reflection mirror 602 in the X-axis direction and the Y-axis mirror 604 scans the laser light L reflected by the X-axis mirror 603 in the Y-axis direction. Thereby, one block on the plate surface that becomes the scattering surface 11a of the acrylic resin plate may be machined.

For instance, one block of concave portions, i.e., pluralities of concave portions 12 arrayed along the Y-axis formed by pluralities of columns along the X-axis, may be formed on the plate surface that becomes the scattering surface 11a of the acrylic resin plate by scanning the pulsed laser light L by the X-axis and Y-axis mirrors 603 and 604.

The condenser lens 605 is a convex lens for example and is formed into a shape that permits the laser light L scanned by the X-axis and Y-axis mirrors 603 and 604 to enter substantially perpendicularly to the plate surface that becomes the scattering surface 11a of the acrylic resin plate.

By constructing as described above, the laser light L outputted out of the laser oscillator 601 is irradiated to the plate surface of the acrylic resin plate through the reflection mirror 602, the X-axis mirror 603, the Y-axis mirror 604 and the condenser lens 605 and the concave portions 12 (FIG. 1) may be formed as the acrylic resin melts and evaporates.

FIG. 3 is an explanatory diagram showing the light scattering pattern formed by the laser machining apparatus 600.

As shown in FIG. 3, a large number of oval concave portions 12 (dots) that are long in the Y-axis direction when viewed planarly by being scanned by the Y-axis mirror 604 is formed on the plate surface of the acrylic resin plate. Then, the respective concave portions 12 are arrayed staggeringly and are formed so as to approach to a round circular shape from the oval shape as they separate from the LEDs 31 (FIG. 1) along the light irradiating direction L1 of the LEDs 31. Thereby, the uneven luminance of the light emitted out of the output surface 11b of the light guide panel 11 may be reduced.

Next, FIG. 4 is an explanatory diagram showing the plate surface that becomes the scattering plane 11a of the acrylic resin plate, i.e., the light guide panel 11. The control section 607 of the laser machining apparatus 600 (see FIG. 2) marks off the plate surface that becomes the scattering surface 11a of the acrylic resin plate, i.e., the light guide panel 11, into a plurality of rectangular scanning blocks 11B arrayed in the X-and Y-axis directions as shown in FIG. 4. It is noted that although mark-off lines (solid lines) for marking off the plate surface per scanning block 11B are shown in FIG. 4 for the purpose of explanation, actually no mark-off line is formed on the acrylic resin plate.

The scanning block 11B is set in a range to which the laser light L may be scanned by the X-axis and Y-axis mirrors 603 and 604 of the laser machining apparatus 600. Then, the control section 607 of the laser machining apparatus 600 moves the acrylic resin plate in unit of block by the X-Y table 606 in scanning the laser light L per each scanning block11B to laser-machine the plate surface of the acrylic resin plate.

This operation will be explained more specifically. At first, the acrylic resin plate that becomes the light guide panel 11 is marked off into 12 lines of scanning blocks 11B in the X-axis direction and to 22 columns of scanning blocks 11B in the Y-axis direction in FIG. 3. Then, when laser-machining of one of scanning block 11B ends, the X-Y table 606 moves the acrylic resin plate by one block in the X-axis direction to implement laser-machining on the neighboring scanning block 11B. Then, when the laser-machining of the concave portion 12 scanning blocks 11B in one column ends, the X-Y table 606 moves the acrylic resin plate by one block in the X-axis direction to implement the laser-machining of the scanning blocks 11B in the neighboring column one after another. The laser-machining is carried out on the whole scanning blocks 11B by such operation as described above.

It is possible to shorten a time required for fabricating the light guide panel 11 by scanning the laser light L per each scanning block 11B by moving the acrylic resin plate as described above, as compared to a case of moving the acrylic resin plate by the X-Y table every time when the concave portion is formed one by one. When the laser-machining is implemented on a large size acrylic resin plate, e.g., 40-inch or more in particular, it is possible to machine the light guide panel 11 even by a laser machining apparatus 600 whose structure is simplified by omitting a fθ lens and others and to remarkably shorten the time required for fabricating the light guide panel 11 because the surface of the acrylic resin plate is laser-machined in unit of block. Accordingly, it is possible to improve the productivity of the light guide panel 11.

By the way, while FIG. 5 is a diagrammatic view showing the concave portion 12 formed on the scattering surface 11a of the light guide panel, a large number of micro-concavities and convexities 12a is formed on the surface of the concave portion 12 in the present embodiment.

Diameters of these large numbers of micro-concavities and convexities 12a (the micro-concavity or micro-convexity) are set from 1 μn to 20 μm. That is, if the diameter of the micro-concavities and convexities is distributed in a range under 1 μm, light inputted to the light guide panel is not totally reflected by the concave portion. The light then refracts and causes the color aberration. If the diameter of the micro-concavities and convexities is distributed in a range exceeding 20 μm, light scattering efficiency in the concave portion remarkably drops and may cause the drop of luminance and uneven luminance. It is noted that although the color aberration occurs also when the diameter of the micro-concavities and convexities exceeds 20 pm, the drop of luminance and the uneven luminance are more remarkable.

Accordingly, the diameter of the micro-concavities and convexities 12a is set from 1 μm to 20 μm in the present embodiment to improve the light scattering efficiency in each concave portion 12, to enhance the luminance of light outputted out of the output surface 11b of the light guide panel 11 and to reduce the uneven luminance and color aberration of the light to be outputted.

Here, although there are various methods for fabricating the light guide panel in which the concave portions are formed, such as methods of using a die assembly and of cutting the concave portions by tools, the method of laser-machining by the laser machining apparatus 600 described above is most suitable in terms of that the time required for fabricating the light guide panel is shortened.

Then, although it is conceivable to form the micro-concavities and convexities on the surface of the concave portion by sandblasting after machining by laser, it takes time to fabricate the light guide panel. Still more, the diameter of the micro-concavities and convexities formed by sandblasting tends to be less than 1 μm, causing color aberration.

Then, the present embodiment selects the acrylic resin plate, that becomes the light guide panel 11, from materials by which the large number of micro-concavities and convexities 12a whose diameter is 1 μm to 20 μm is formed on the surface of the concave portion 12 when the concave portion 12 is formed by laser-machining.

Specifically, the inventor found that the large number of micro-concavities and convexities 12a whose diameter is 1 μm to 20 μm may be formed on the surface of the concave portion 12 when the concave portion 12 is formed by laser-machining by selecting polymethylmethacrylate whose weight-average molecular weight is 10,000 to 100,000 as the acrylic resin plate. The acrylic resin plate of polymethylmethacrylate whose weight-average molecular weight is 10,000 to 100,000 may be produced by a casting method.

If an acrylic resin plate made of polymethylmethacrylate whose weight-average molecular weight is less than 10,000 is used for example, the surface of the concave portion is smoothed having less micro-concavities and convexities (state closer to a mirror-surface)in forming the concave portion by laser light.

It is because the larger the molecular weight, the larger the diameter of the micro-concavity and convexity tends to be and the smaller the molecular weight, the smaller the diameter of the micro-concavity and convexity tends to be when the surface of the acrylic resin plate is melted by heat of the laser light.

Accordingly, the number of micro-concavities and convexities to be formed is remarkably small with the acrylic resin plate made of the polymethylmethacrylate whose weight-average molecular weight under 10,000 and the drop of luminance or the uneven luminance occurs because the light scattering efficiency of the concave portion drops.

Meanwhile, the diameter of the micro-concavities and convexities to be formed tends to exceed 20 μm because the molecular weight is large with the acrylic resin plate made of the polymethylmethacrylate whose weight-average molecular weight exceeds 100,000. The diameter of the micro-concavities and convexities is too large if the diameter of the micro-concavities and convexities exceeds 20 μm as such and the drop of luminance or the uneven luminance occurs because the light scattering efficiency of the concave portion remarkably drops.

Then, the large number of concave portions 12 are formed and the large number of micro-concavities and convexities 12a whose diameter is in the range from 1 μm to 20 μm are formed on the surface of the concave portions 12 by irradiating the laser light L on the plate surface of the acrylic resin plate made of polymethylmethacrylate whose weight-average molecular weight is 10,000 to 100,000 in the first embodiment.

By arranging as described above, the diameter of the micro-concavities and convexities 12a formed in the concave portions 12 distributes in the range from 1 μm to 20 μm, so that the concave portions 12 substantially totally reflect light entered from the LED 31. Thereby, the color aberration may be effectively reduced and the light scattering efficiency of the concave portions 12 increases, so that the luminance of the light outputted out of the output surface 11b of the light guide panel 11 improves and the uneven luminance may be effectively reduced.

Then, because the luminance improves and the uneven luminance and color aberration are reduced in the backlight unit 500 having such light guide panel 11, the product quality as the light source unit is improved.

(Second Embodiment)

Next, while a second embodiment will be explained, components and structures thereof similar to ones explained in the first embodiment described above will be denoted by the same reference numerals and an explanation thereof will be omitted here.

In the second embodiment, the inventor found that the large number of micro-concavities and convexities 12a whose diameter is in the range from 1 μm to 20 μm may be formed on the surface of the concave portion 12 by using an acrylic resin plate made of a copolymer of 90 to 99.9 % by weight of methyl methacrylate and 0.1 to 10 % by weight of acrylic ester and whose weight-average molecular weight is in a range from 1,000 to 100,000 as the light guide panel 11.

It is noted that if the weight-average molecular weight exceeds 100,000, the light scattering efficiency of the concave portion remarkably drops and causes the drop of luminance or uneven luminance similarly to the acrylic resin plate made of polymethylmethacrylate of the embodiment described above.

The present embodiment is different from the acrylic resin plate of the first embodiment that is made of polymethylmethacrylate in that the large number of micro-concavities and convexities 12a whose diameter is distributed in the range from 1 μm to 20 μm is formed even if the weight-average molecular weight is under 10,000, if it is 1,000 or more.

That is, if the acrylic resin plate is the copolymer of 90 to 99.9 % by weight of methyl methacrylate and 0.1 to 10 % by weight of acrylic ester and whose weight-average molecular weight is in the range from 1,000 to 100,000, bond between molecules of the copolymer is strong and the acrylic resin plate does not melt, becoming one closer to a mirror-surface even if it is exposed to heat of the laser light. Accordingly, the large number of micro-concavities and convexities whose diameter is larger than a size corresponding to the molecular weight of the copolymer is formed on the surface of the concave portion 12 as a result of enhancing the bonding strength between the molecules by adopting the copolymer.

It is noted that the larger the weight-average molecular weight, the smaller the influence of the bonding strength between the molecules of the copolymer exerted on the diameter of the micro-concavities and convexities 12a to be formed becomes. Accordingly, an upper limit of the weight-average molecular weight is barely influenced by making the light guide panel even by the copolymer and is 100,000 in the same manner with the first embodiment described above. In contrary, the smaller the weight-average molecular weight, the larger the influence of the bonding strength between the molecules of the copolymer exerted on the diameter of the micro-concavities and convexities to be formed becomes. Accordingly, forming the copolymer containing 90 to 99.9 % by weight of methyl methacrylate and 0.1 to 10 % by weight of acrylic ester largely affects the lower limit of the weight-average molecular weight and the lower limit of the weight-average molecular weight may be 1,000 that is smaller than 10,000 of the acrylic resin plate made of methyl methacrylate of the first embodiment described above.

Thus, the large number of micro-concavities and convexities 12a is formed on the surface of the concave portion 12, so that the second embodiment also brings about the same effect with the first embodiment described above.

The acrylic resin plate that is the copolymer of 90 to 99.9 % by weight of methyl methacrylate and 0.1 to 10 % by weight of acrylic ester and whose weight-average molecular weight is from 1, 000 to 100 , 000 may be fabricated by a casting method or a continuous casting method. While the molecular weight of the acrylic resin plate produced by the continuous casting method becomes smaller than that produced by the casting method, a time required for producing the acrylic resin plate is shorter. Accordingly, the continuous casting method is suitable to shorten the time required for producing the acrylic resin plate.

It is noted that the material of the acrylic ester is not specifically limited. For instance, the acrylic ester may include methyl acrylate, ethyl acrylate, n-butyl acrylate, isobutyl acrylate, t-butyl acrylate, alkyl ester acrylate such as 2-etylhexyl acrylate, cychlohexyl acrylate, methyl cychlohexyl acrylate, bornyl acrylate, isobonyl acrylate, cychloalkyl ester acrylate, fenyl acrylate, aromatic ester acrylate such as benzyl acrylate, fluorofenyl acrylate, chlorofenyl, acrylate, fluorobenzyl acrylate, substituted aromatic ester acrylate such as chlorobenzyl acrylate, fluoromethyl acrylate, alkyl halide ester acrylate such as fluoroetyl acrylate, hydroxyalkyl ester acrylate, glycidyl acrylate, ethylene glycol ester acrylate, poly-ethylene glycol ester acrylate and others. These materials may be used as raw materials of the acrylic resin plate by combining or mixing one or two or more materials as necessary. Among these ester acrylates, methyl acrylate is preferable.

It is noted that in the embodiments described above, although the case of forming the dot into the oval shape in a planar view as the concave portion has been explained, the invention is not limited to forming into this shape, and the concave portion may be a circular dot in a planar view or may have a shape other than the dot, such as a groove and the like.

[Exemplary Embodiments]

While the present invention will be specifically explained by the following exemplary embodiments, the invention is not limited to those embodiments by any means.

Five samples have been prepared in the exemplary embodiments.

As a comparative sample A, an acrylic resin plate of 3 mm thick made of polymethylmethacrylate produced by an extrusion process by using methyl methacrylate as a raw material has been used.

As a comparative sample B, an acrylic resin plate of 3 mm thick made of polymethylmethacrylate produced by the extrusion process in another lot from the comparative sample A by using methyl methacrylate as a raw material has been used.

As a sample C, an acrylic resin plate of 3 mm thick made of copolymer produced by the continuous casting method by using methyl methacrylate and acrylic ester as raw materials has been used.

As a sample D, an acrylic resin plate of 3 mm thick made of polymethylmethacrylate produced by the continuous casting method by using methyl methacrylate as a raw material has been used.

As a sample E, an acrylic resin plate of 3 mm thick made of polymethylmethacrylate produced by the casting process in another lot by using methyl methacrylate as a raw material has been used.

As a sample F, an acrylic resin plate of 3 mm thick made of polymethylmethacrylate produced by the casting process in a still different lot by using methyl methacrylate as a raw material has been used.

As a sample G, an acrylic resin plate of 3 mm thick made of polymethylmethacrylate produced by the casting process in a still different lot by using methyl methacrylate as a raw material has been used.

As a sample H, an acrylic resin plate of 3 mm thick made of polymethylmethacrylate produced by the casting method process in a still other lot by using methyl methacrylate as a raw material has been used.

(Comparison of Weight-average Molecular Weight)

A gel permeation chromatography (GPC) was used to measure the molecular weight. It is noted that the measurement of the gel permeation chromatography is carried out based on the principle of size exclusion mechanism of fine pores on the surface of a filler and a polymer to be measured in a column in which the porous filler is packed.

After dissolving the respective samples A through H by tetrahydrofuran (THF), the measurement was carried out by using a liquid chromatography HLC-8120 GPC made by Tosoh Corporation, by arraying three Super HM-Ms in series as a separation column, setting a flow rate as 0.6 methyl methacrylate/min., by using a differential refractometer, by setting measurement temperature at 409C, by setting injection volume at 0.020 methyl methacrylate and by using polystyrene (PS) as a standard polymer.

FIG. 6 is a graph showing molecular weight distribution curves of the respective samples A through H. Numbers attached to each reference characters indicting the respective sample curves are weight-average molecular weights.

It is noted that Table 1 shows the weight-average molecular weights and number-average molecular weights of the respective samples A through H:

[Table 1]

| | WEIGHT-AVERAGE MOLECULAR WEIGHT [Mw] | NUMBER-AVERAGE MOLECULAR WEIGHT [Mn] |
|---|---:|---:|
| COMPARATIVE SAMPLE A: EXTRUSION PROCESS | 1,503 | 881 |
| COMPARATIVE SAMPLE B: EXTRUSION PROCESS | 1,329 | 836 |
| SAMPLE C: CONTINUOUS CASTING METHOD | 2, 241 | 1,211 |
| SAMPLE D: CASTING METHOD | 12,086 | 6,972 |
| SAMPLE E: CASTING METHOD | 11,756 | 6,843 |
| SAMPLE F: CASTING METHOD | 10, 455 | 6,110 |
| SAMPLE G: CASTING METHOD | 13,578 | 8.540 |
| SAMPLE H: CASTING METHOD | 11,299 | 6, 975 |

(continued)

| | WEIGHT-AVERAGE MOLECULAR WEIGHT [Mw] | NUMBER-AVERAGE MOLECULAR WEIGHT [Mn] |
|---|---|---|
| REMARKS:<br>Ni: number of molecules<br>Mi: molecular weight | Weighted mean average weighting molecular weight $Mw = \frac{\Sigma (Mi^2 \cdot Ni)}{\Sigma (Mi \cdot Ni)}$ | Simple arithmetic average $Mn = \frac{\Sigma (Mi \cdot Ni)}{\Sigma Ni}$ |

It was confirmed from the measured results described above that the weight-average molecular weight of the sample C of the acrylic resin plate of the compolymer made of methyl methacrylate and acrylic ester fabricated by the continuous casting method falls within the range from 1,000 to 100,000.

Still more, it was confirmed that the weight-average molecular weights of the samples D through H of the acrylic resin plate of polymethylmethacrylate fabricated by the casting method fall within the range from 1,000 to 100,000.

It is noted that the weight-average molecular weights of the samples A and B of the acrylic resin plate made of polymethylmethacrylate fabricated by the extrusion process was under 10,000.

(Comparison of Luminance)

The large number of concave portions whose length in the longitudinal direction is in a range from 0.3 to 0.45 μm, in the lateral direction is in a range from 0.07 to 0.45 μm and 0.01 to 0.35 μm in depth were formed in the respective samples A through E staggeringly at intervals of 0.4 mm in the lateral direction by using a $CO_2$ laser oscillator whose wavelength is 10.6 μm and output is 30 W.

Still more, the respective samples A through E were cut into a length of 3.5 inch, six LEDs were disposed at each edge surfaces to measure luminance of the inside at 3 % of the output surface at 15 vertical points and 15 horizontal points, i.e. , 225 points in total. Then, their average luminance was compared.

FIG. 7 is a graph showing the average luminance of the respective samples A through E.

As shown in FIG. 7, it can be seen that the samples C through E have increased luminance as compared to the comparison samples A and B. In particular, the luminance of the sample C of the acrylic resin plate made of copolymer of methyl methacrylate and acrylic ester made by the continuous casting method increased as compared to the other samples D and E. It is noted that although the uneven luminance was seen in the samples A and B, no uneven luminance was seen in the samples C, D and E.

(State of Surface of Concave Portion)

FIG. 8 is a microscope photograph showing the concave portion formed on the comparative sample A, FIG. 9 is a microscope photograph showing the concave portion formed on the comparative sample C and FIG. 10 is a microscope photograph showing the concave portion formed on the comparative sample D.

Further, FIG. 11 is a graph showing the micro-concavities and convexities of the surface of the concave portion in the longitudinal direction of the concave portion of the comparative sample A shown in FIG. 8, FIG. 12 is a graph showing the micro-concavities and convexities of the surface of the concave portion in the longitudinal direction of the sample C shown in FIG.9 and FIG. 13 is a graph showing the micro-concavities and convexities of the surface of the concave portion in the longitudinal direction of the sample D shown in FIG.10.

It can be seen that the surface of the concave portion formed on the comparative sample A is smooth and has less micro-concavities and convexities as shown in FIGs. 8 and 11.

In contrary to that, it can be seen that the surface of the concave portion formed on the sample C has a large number of micro-concavities and convexities and is coarse as compared to the sample A as seen in FIGs.9 and 12. Similarly to that, the surface of the concave portion formed on the sample D has a large number of micro-concavities and convexities and is coarse as compared to the sample A as shown in FIGs. 10 and 13.

FIG. 14 is a graph showing the distribution of the diameters of the micro-concavities and convexities of the respective samples A, C and D.

It can be seen that the diameters of the micro-concavities and convexities of the samples C and D are widely distributed in the range from 1 μm to 20 μm as shown in FIG. 14. In contrary to that, the diameter of the comparative sample A is concentrated to 2 μm even though it falls within the range of 1 μm to 20 μm.

Table 2 shows a rate of a total length of the micro-concavities and convexities with respect to a length of the concave portion in the longitudinal direction:
[Table 2]

| | A | B | C |
|---|---|---|---|
| LENGTH OF CONCAVE PORTION IN LONGITUDINAL DIRECTION [μm] | 263 | 448 | 283 |
| TOTAL LENGTH OF MICRO - CONCAVITIES AND CONVEXITIES [μm] | 16 | 347 | 130 |
| RATE | 6% | 77% | 46% |

According to Table 2, the diameter of the micro-concavities and convexities of the comparative sample A is concentrated to 2 μm and its number is small, so that the rate of the total length of the micro-concavities and convexities with respect to the concave portion, i.e., the surface roughness, is merely 6 %, having almost no micro-concavities and convexities. Then, it canbe seenthat there is substantiallynomicro-concavities and convexities when the result of average luminance shown in FIG. 7 is referred and that the luminance is low.

In contrary to that, the rate of the sample C is 77 % and is largest among the samples and the luminance is highest as seen in the result of average luminance shown in FIG. 7. While the rate of the sample D is 46 % and is in intermediate between the comparative sample A and the sample C, it can be seen that the luminance is intermediate between the comparative sample A and the sample C from the result of the average luminance shown in FIG. 7. That is, it can be seen that the larger the surface roughness, the more the luminance increases.

It is noted that when the large number of micro-concavities and convexities is formed by sandblasting the concave portion formed on the comparative sample A, the diameter of the micro-concavities and convexities thus formed was under 1 μm and caused the color aberration.

From the results described above, it was confirmed that the large number of micro-concavities and convexities may be formed on the concave portion by forming the concave portion by the laser light on the samples D through H of the acrylic resin plates made of polymethylmethacrylate whose weight-average molecular weight is 10,000 to 100,000 and on the sample C that is the copolymer of 90 to 99.9 % by weight of methyl methacrylate and 0.1 to 10 % by weight of acrylic ester and whose weight-average molecular weight is 1,000 to 100,000. Then, it was confirmed that the uneven luminance and color aberration are reduced and the luminance is remarkably improved by the large number of micro-concavities and convexities formed on the surface of the concave portion by the laser light.

## Claims

1. A light guide panel (11) made of an acrylic resin plate and comprising a scattering surface (11a) and an output surface (11b) for outputting light scattered by said scattering surface (11a) to an outside of the panel;
**characterized in that** said acrylic resin plate is made of polymethylmethacrylate whose weight-average molecular weight is 10,000 to 100,000 or a copolymer which is composed of 90 to 99.9 % by weight of methyl methacrylate and 0.1 to 10 % by weight of acrylic ester and whose weight-average molecular weight is 1,000 to 100,000; and that said scattering surface (11a) has a large number of concave portions (12) each of which also has a large number of micro-concavities and convexities (12a) therein formed by laser light (L) irradiated on the acrylic resin plate.

2. The light guide panel (11) according to Claim 1, **characterized in that** said acrylic resin plate is made of polymethylmethacrylate whose weight-average molecular weight is 10,000 to 100,000.

3. The light guide panel (11) according to Claim 1, **characterized in that** the acrylic resin plate is made of the copolymer which is composed of 90 to 99.9 % by weight of methyl methacrylate and 0.1 to 10 % by weight of acrylic ester and whose weight-average molecular weight is 1,000 to 100,000.

4. The light guide panel (11) according to Claim 1, **characterized in that** each of said micro-concavities and convexities (12a) is formed to have a diameter within a range from 1 μm to 20 μm.

5. The light guide panel (11) according to Claim 1, wherein each of said concave portions is a dot or a groove.

6. A light source unit (500), comprising:

the light guide panel (11) according to any one of Claims 1 to 5; and
a light source section (15) disposed on a edge surface of said light guide panel (11).

**7.** A method for manufacturing a light guide panel (11), comprising steps of:

marking off a surface of an acrylic resin plate into a plurality of scanning blocks (11B) in advance, the acrylic resin plate being made of polymethylmethacrylate whose weight-average molecular weight is 10,000 to 100,000 or a copolymer which is composed of 90 to 99.9 % by weight of methyl methacrylate and 0.1 to 10 % by weight of acrylic ester, and whose weight-average molecular weight is 1,000 to 100,000; and
scanning laser light per each scanning block (11B) to form a large number of concave portions (12) each of which also has a large number of micro-concavities and convexities (12a) on the surface of said acrylic resin plate.

**8.** The method according to Claim 7, **characterized in that** said acrylic resin plate is made of polymethylmethacrylate whose weight-average molecular weight is 10,000 to 100,000.

**9.** The method according to Claim 7, **characterized in that** said acrylic resin plate is made of the copolymer which is composed of 90 to 99.9 % by weight of methyl methacrylate and 0.1 to 10 % by weight of acrylic ester and whose weight-average molecular weight is 1,000 to 100,000.

**10.** The method according to Claim 7, **characterized in that** each of said micro-concavities and convexities (12a) is formed to have a diameter within a range from 1 μm to 20 μm.

**11.** The method according to Claim 7, wherein each of said concave portions is a dot or a groove.

FIG.1

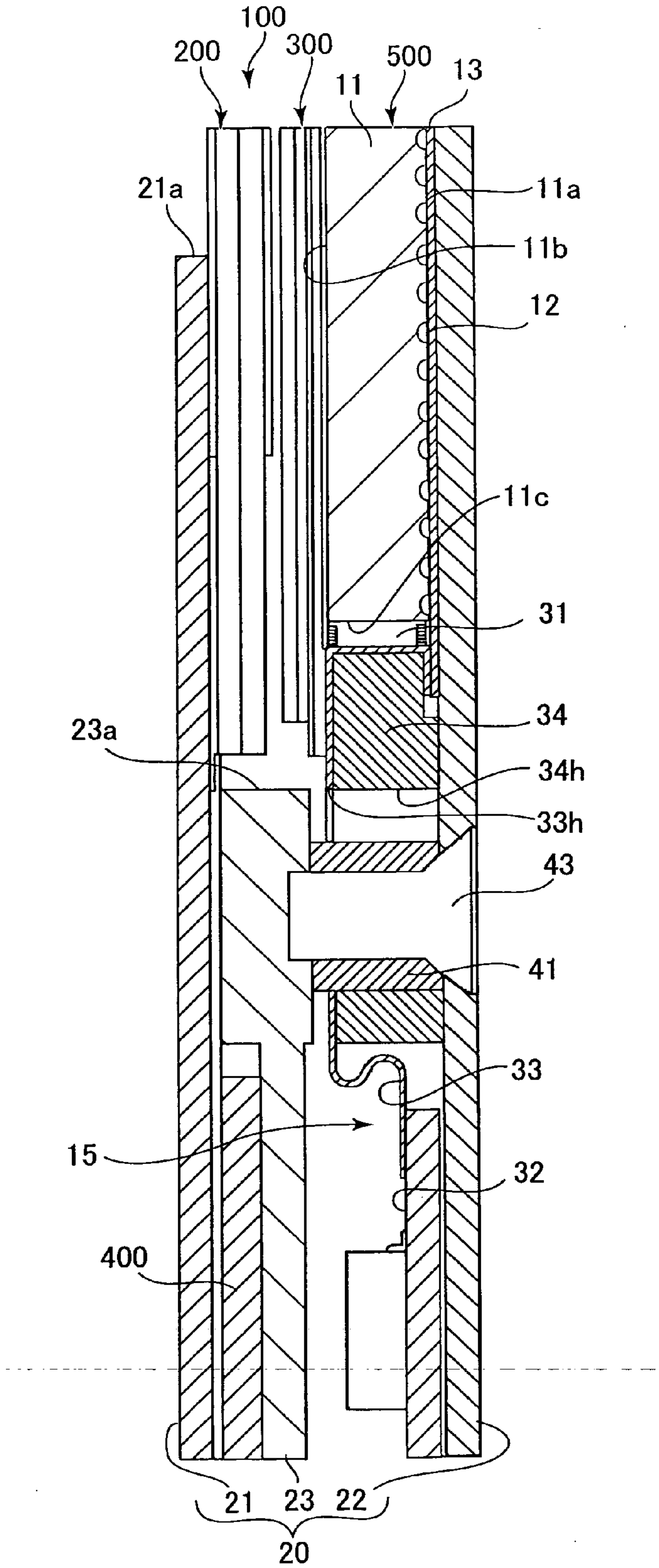
100
200
300
500
11
13
21a
11a
11b
12
11c
31
34
23a
34h
33h
43
41
33
15
32
400
21
23
22
20

FIG.2

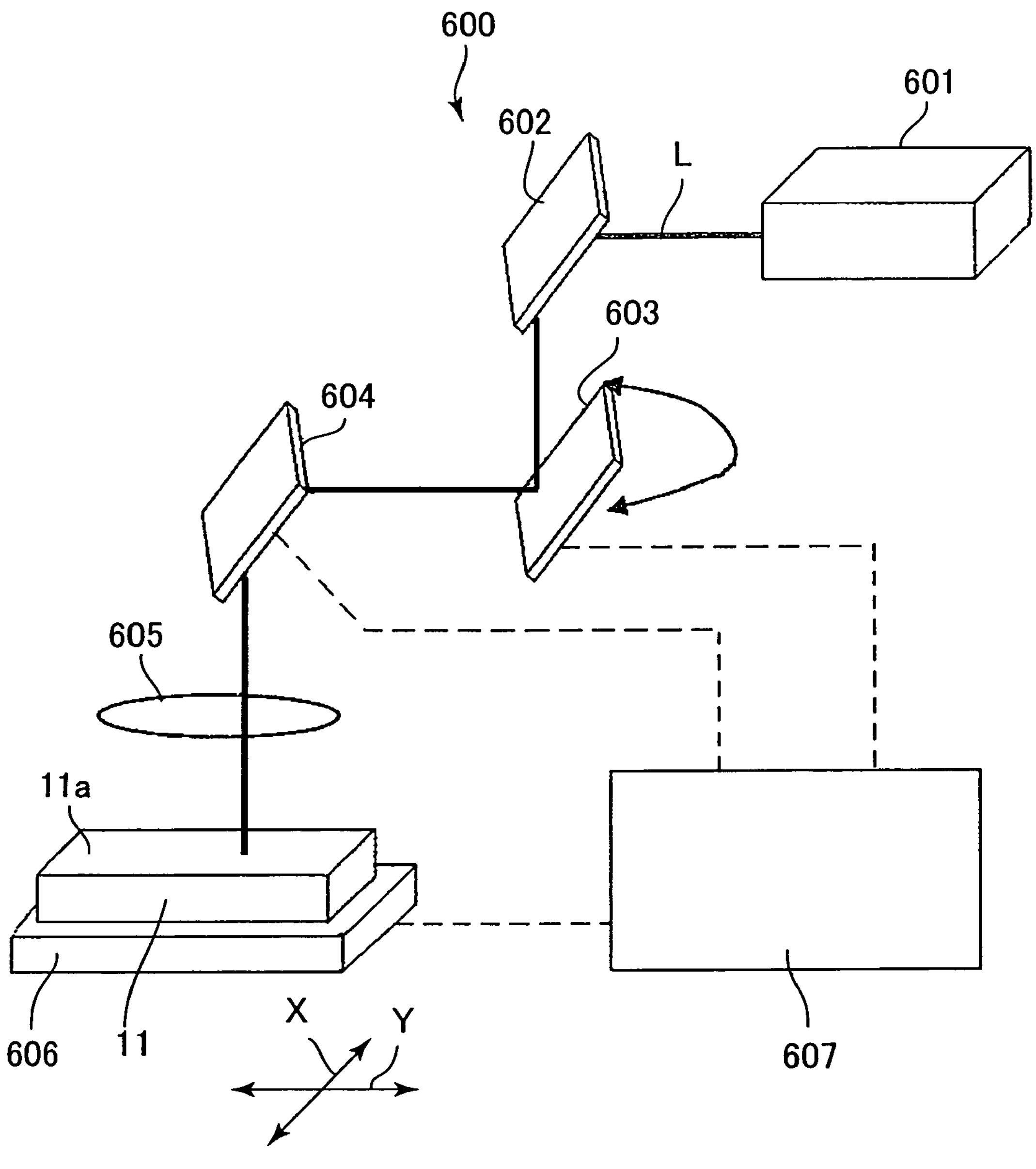

FIG.3

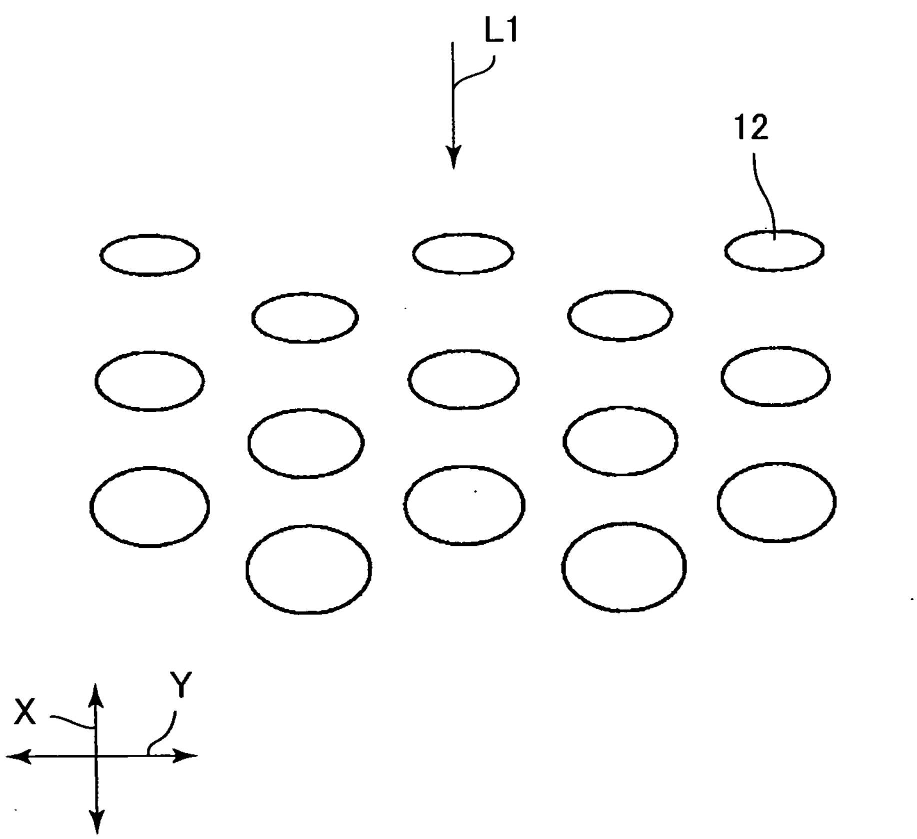

FIG.4

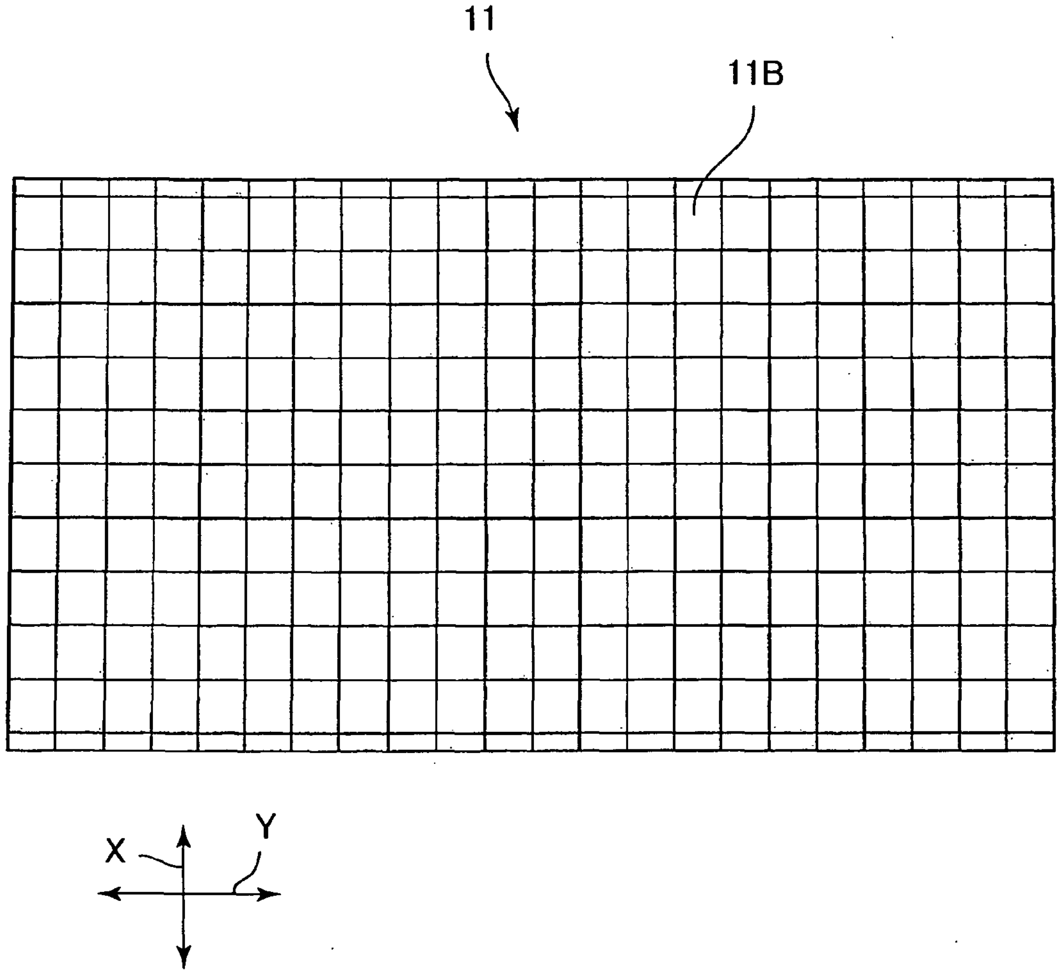

FIG.5

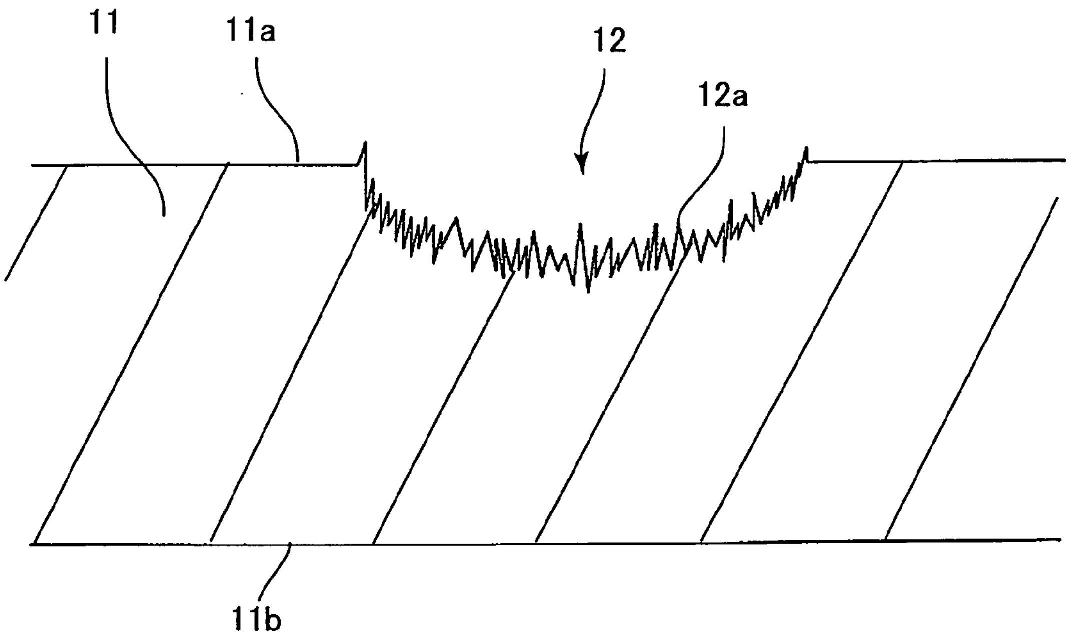

FIG.6

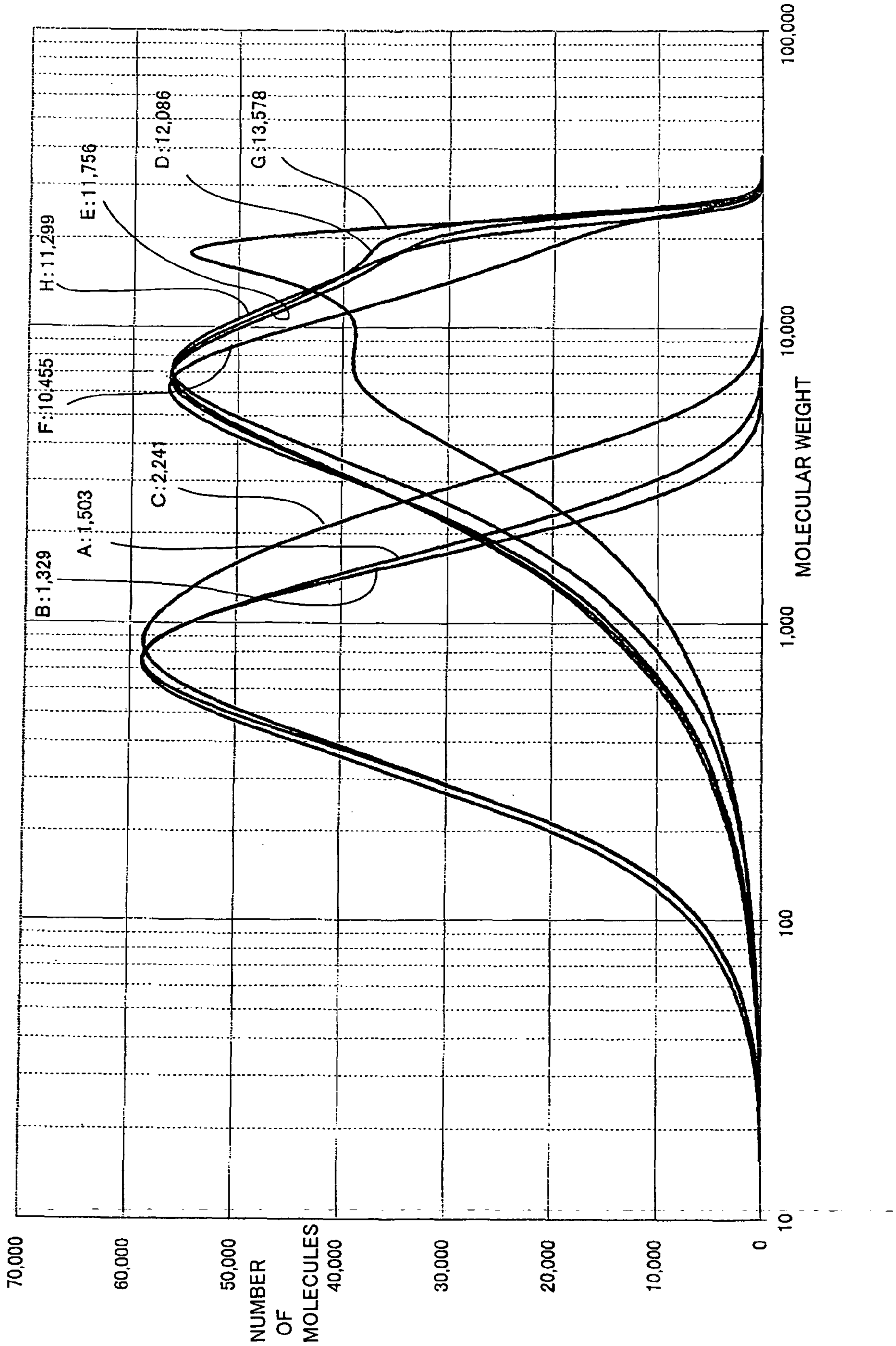
B:1,329
A:1,503
C:2,241
F:10,455
H:11,299
E:11,756
D:12,086
G:13,578
70,000
60,000
50,000
40,000
30,000
20,000
10,000
0
NUMBER
OF
MOLECULES
10
100
1,000
10,000
100,000
MOLECULAR WEIGHT

FIG.7

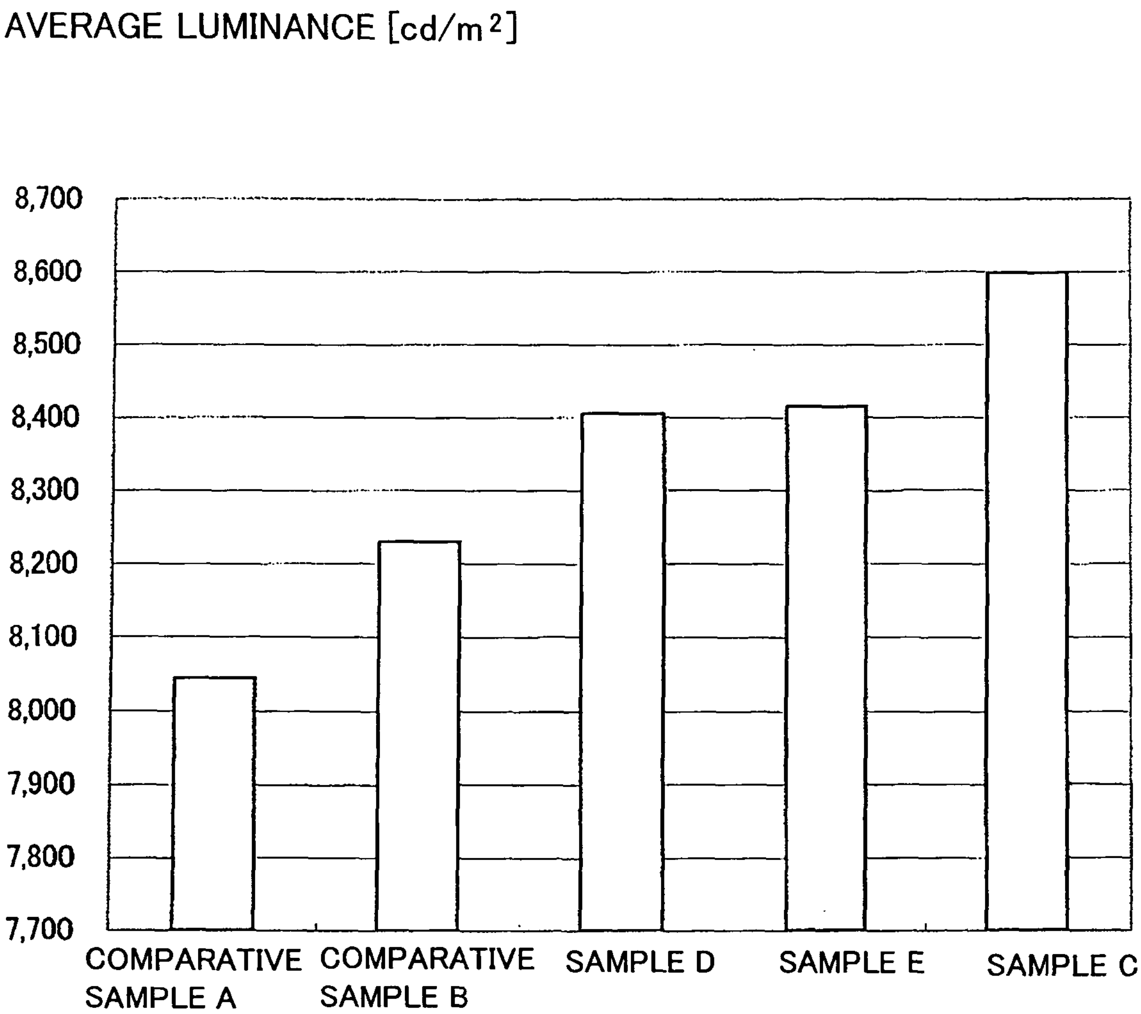
AVERAGE LUMINANCE [cd/m2]
8,700
8,600
8,500
8,400
8,300
8,200
8,100
8,000
7,900
7,800
7,700
COMPARATIVE SAMPLE A
COMPARATIVE SAMPLE B
SAMPLE D
SAMPLE E
SAMPLE C

Fig 8

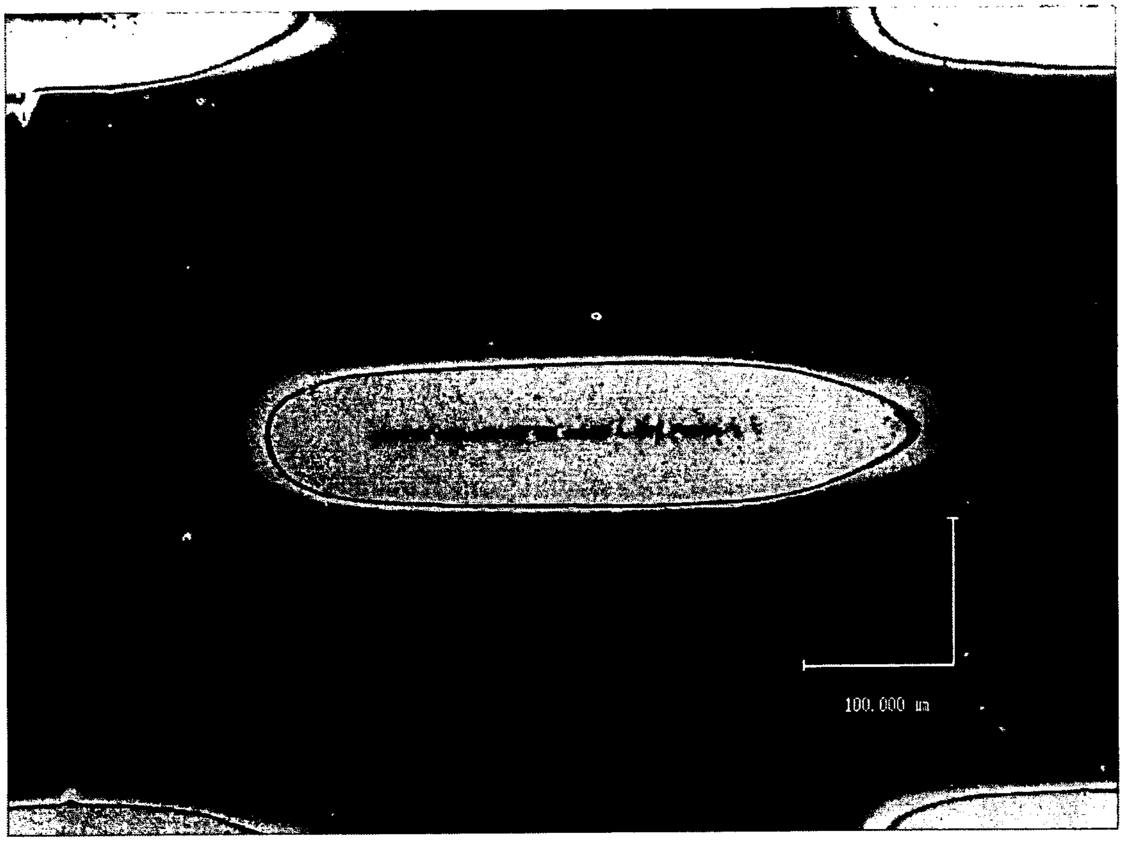

Fig 9

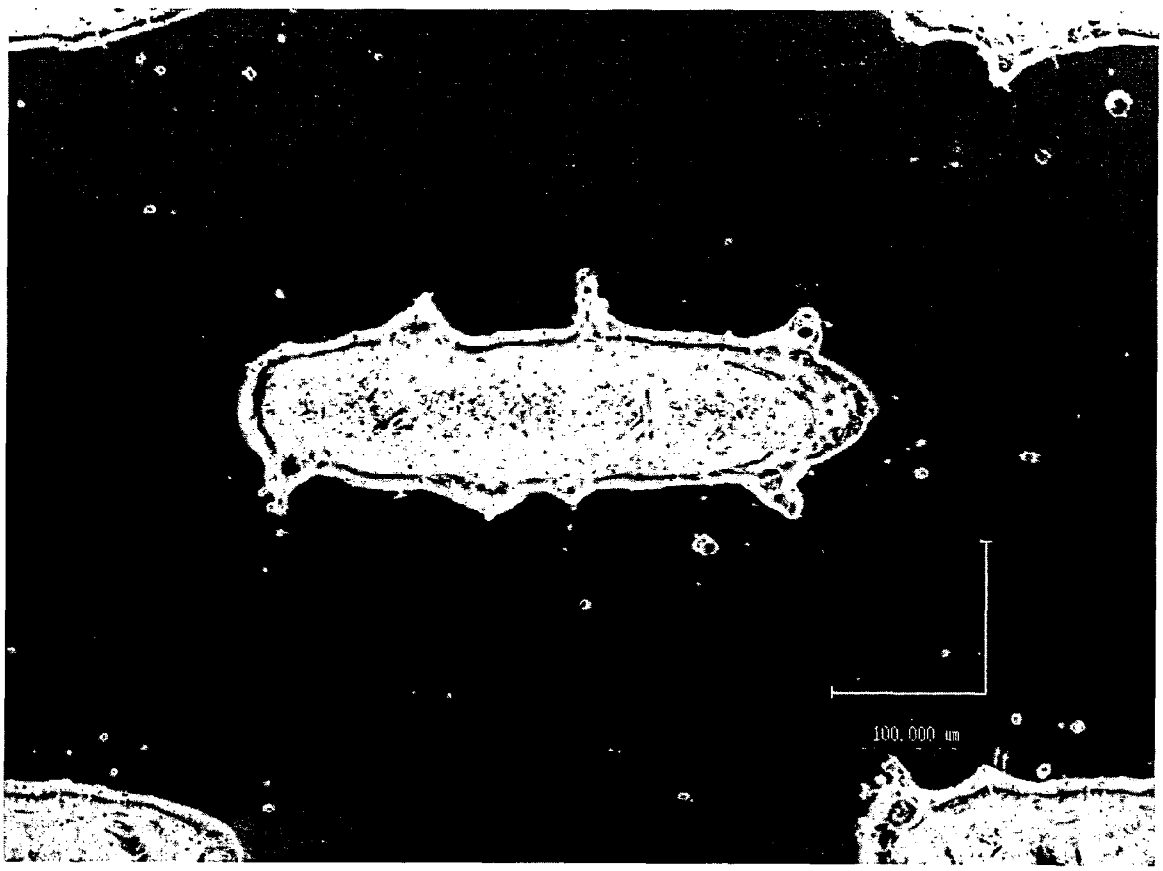

Fig 10

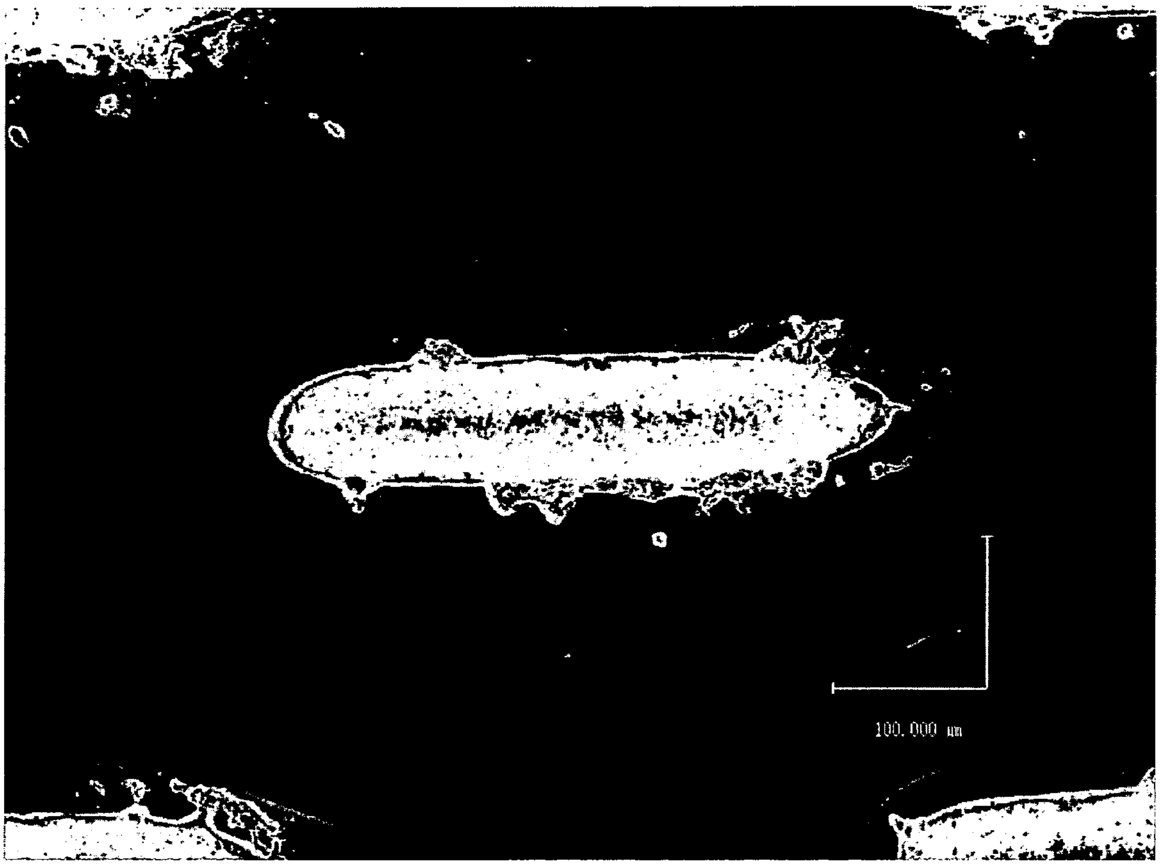

FIG.11

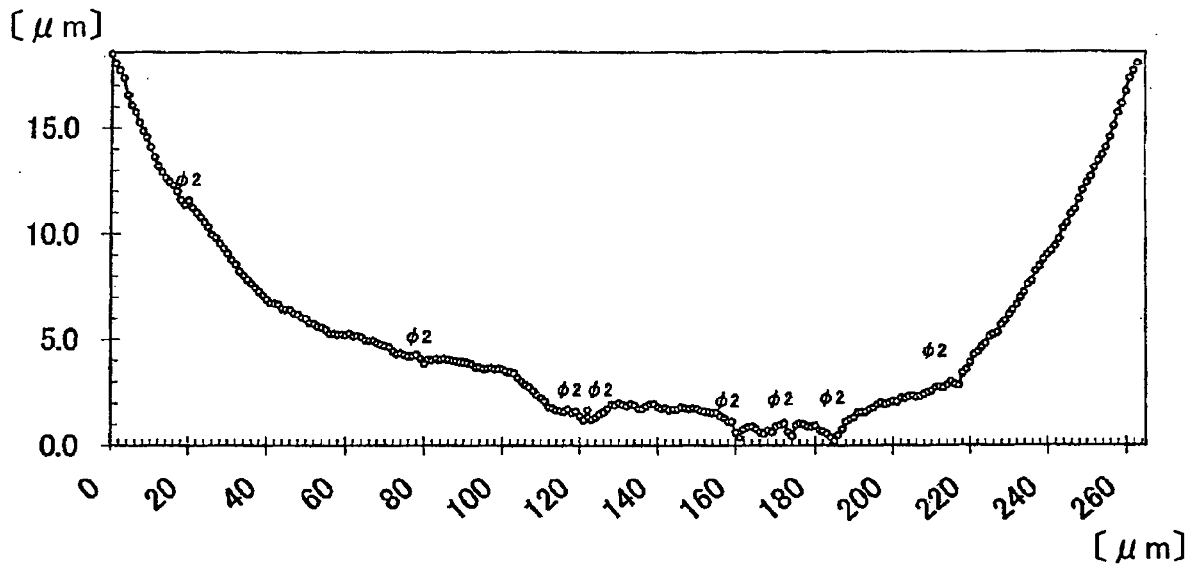
[μm]
15.0
10.0
5.0
0.0
φ2
φ2
φ2
φ2
φ2
φ2
φ2
φ2
0
20
40
60
80
100
120
140
160
180
200
220
240
260
[μm]

FIG.12

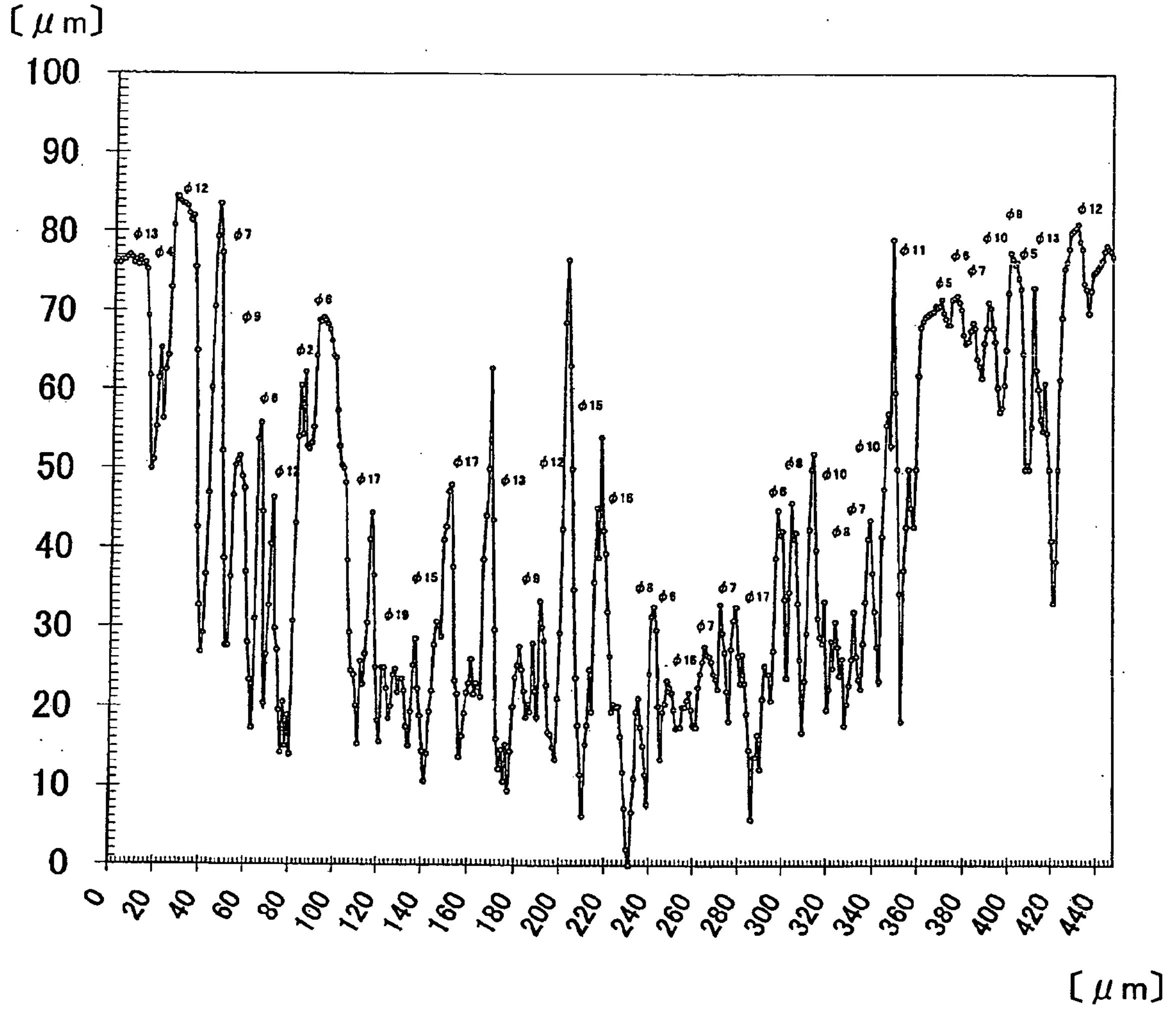
[μm]
100
90
80
70
60
50
40
30
20
10
0
0
20
40
60
80
100
120
140
160
180
200
220
240
260
280
300
320
340
360
380
400
420
440
[μm]

FIG.13

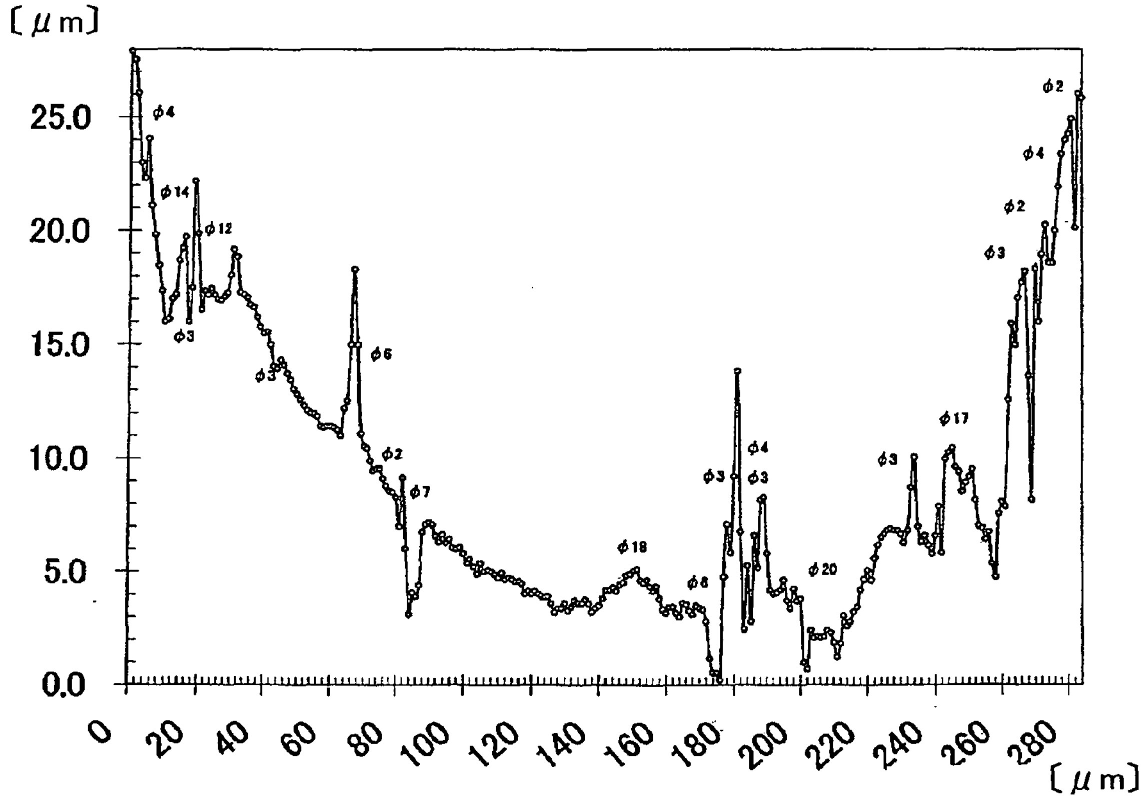
[μm]
25.0
20.0
15.0
10.0
5.0
0.0
0
20
40
60
80
100
120
140
160
180
200
220
240
260
280
[μm]
φ4
φ14
φ12
φ3
φ3
φ6
φ2
φ7
φ18
φ6
φ3
φ4
φ3
φ20
φ3
φ17
φ3
φ2
φ4
φ2

FIG.14

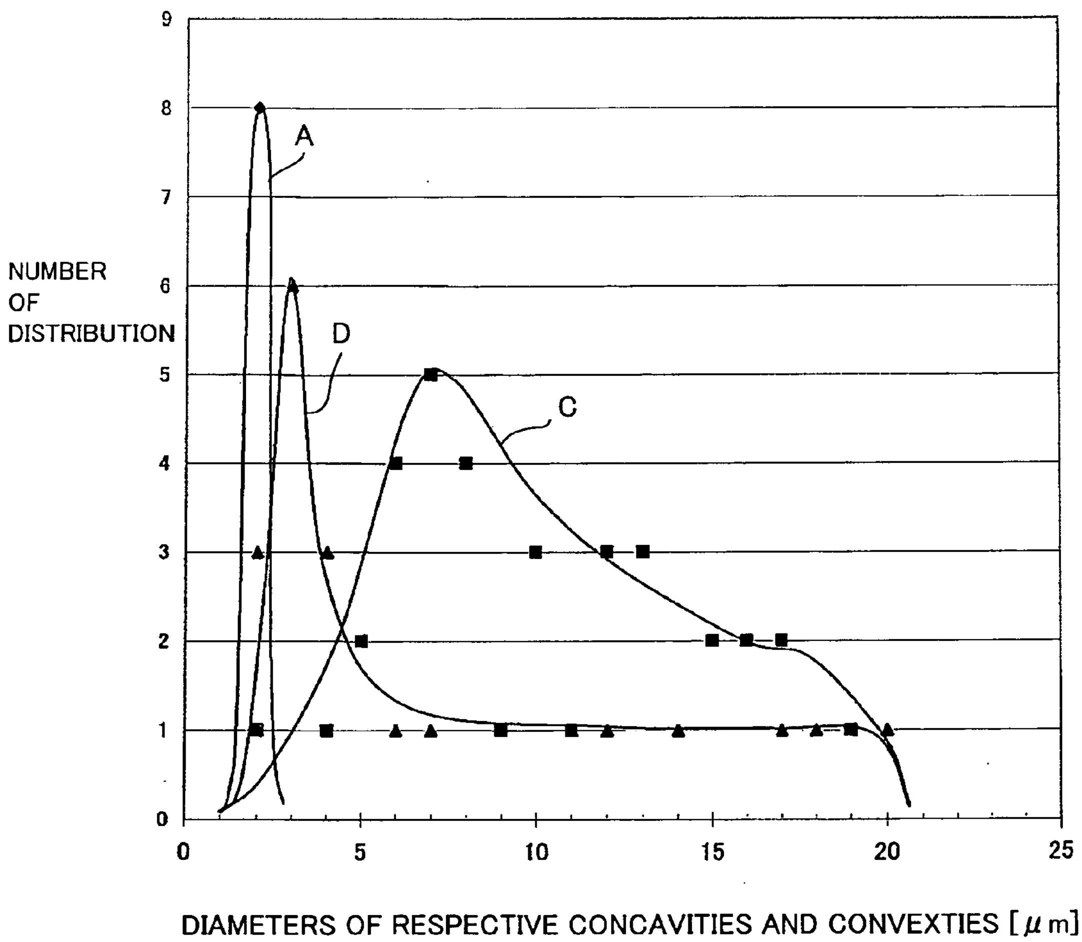
NUMBER
OF
DISTRIBUTION
9
8
7
6
5
4
3
2
1
0
A
D
C
0
5
10
15
20
25
DIAMETERS OF RESPECTIVE CONCAVITIES AND CONVEXTIES [μm]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008276161 A
- JP HEI8327807 B
- JP 2000066029 A